# EUROPÄISCHE PATENTSCHRIFT

(11) **EP 3 580 393 B1**
(45) Veröffentlichungstag und Bekanntmachung des Hinweises auf die Patenterteilung: **07.04.2021**
(21) Anmeldenummer: 18700397.5
(22) Anmeldetag: 05.01.2018
(51) Int. Cl.: E01B 35/00, B61K 9/08

(54) **VERFAHREN UND SCHIENENFAHRZEUG ZUR BERÜHRUNGSLOSEN ERFASSUNG EINER GLEISGEOMETRIE**
METHOD AND RAILWAY VEHICLE FOR CONTACTLESSLY CAPTURING A TRACK GEOMETRY
PROCÉDÉ ET VÉHICULE DE VOIE FERRÉE DE DÉTECTION SANS CONTACT DE LA GÉOMÉTRIE D'UNE VOIE FERRÉE

(30) Priorität: 07.02.2017 AT 392017
(43) Veröffentlichungstag der Anmeldung: 18.12.2019
(73) Patentinhaber: Plasser & Theurer Export von Bahnbaumaschinen GmbH, 1010 Wien (AT)
(72) Erfinder: BÜRGER, Martin, 4030 Linz (AT)
(86) Internationale Anmeldenummer: PCT/EP2018/050227
(87) Internationale Veröffentlichungsnummer: WO 2018/145829

(56) Entgegenhaltungen:
- DE-A1- 3 444 723
- DE-A1- 19 801 311
- DE-A1-102014 217 954
- FR-A1- 2 890 086
- JP-A- H0 875 423

## Beschreibung

### Gebiet der Technik

Die Erfindung betrifft ein Verfahren zur berührungslosen Erfassung einer Gleisgeometrie eines Gleises mittels eines Schienenfahrzeugs, das mit Schienenfahrwerken entlang des Gleises bewegt wird, wobei mittels eines Laserscanners in Querrichtung verlaufende Profildaten des Gleises erstellt werden, wobei mittels einer Auswerteeinrichtung die Profildaten relativ zu einer am Schienenfahrzeug vorgegebenen Bezugsbasis ausgewertet werden, um daraus den Verlauf einer Gleismittelachse und/oder einer Schiene abzuleiten. Zudem betrifft die Erfindung ein Schienenfahrzeug zur Durchführung des Verfahrens.

### Stand der Technik

Für eine Instandhaltung des Gleisoberbaus sind regelmäßige Kontrollen erforderlich. Dazu wird in regelmäßigen Abständen das Gleis mit einer Gleismessvorrichtung in Form eines Gleismessfahrzeuges befahren, welches die Gleisgeometrie erfasst, um diese im Anschluss zu bewerten. Da sich die Gleisgeometrie direkt auf die Fahrdynamik eines auf Schienen fahrenden Fahrzeugs auswirkt, sind diese Messungen entscheidend für die Bewertung der Bahnsicherheit. Gleismessfahrzeuge sind daher bereits seit Langem bekannt.

Häufig werden Messsysteme mit mechanischen Sensoren verwendet, die mit beweglichen Punktfühlern ständig in Kontakt mit dem Gleis sind. Aus der Bewegung der Sensoren lässt sich in weiterer Folge die Gleisgeometrie ableiten.

Verfahren und Vorrichtungen bzw. Maschinen zum berührungslosen Erfassen der Geometrie von Gleisen sind beispielsweise aus FR 2 890 086 A1, DE 34 44 723 A1 und DE 198 01 311 sowie der DE102014217954 bekannt.

Auch Messvorrichtungen mit Messsehnen sind aus dem Stand der Technik bekannt, beispielsweise aus der EP 1 020 563 A1. Für die Messung der Ist-Lage eines Gleises werden dazu drei Messpunkte über Schienenfahrwerke (Messwagen) auf dem Gleis abgenommen. Zur Messung ist eine Messsehne zwischen dem vorderen und dem hinteren Messwagen gespannt. Über den mittleren Messwagen wird die Auslenkung der Sehne und somit die Ist-Lage des Gleises abgenommen. Durch die ständig mit dem Gleis in Kontakt stehenden Sensoren stoßen diese Messsysteme vor allem bei höheren Geschwindigkeiten schnell an ihre Grenzen.

AT 514 502 A1 beschreibt ein Messsystem, bei dem zur Ermittlung der Position eines Gleis-Festpunktes ein kontinuierlich am Gleis entlang bewegter Rotationslaser genutzt wird. Anhand eines Abstandes zu einem erkannten Festpunkt wird eine mittels eines Schienenfahrwerks abgetastete Ist-Lage des Gleises in Bezug zu einer Soll-Lage bewertet. Durch die Notwendigkeit der Referenzpunkte neben dem Gleis ist dieses Messsystem jedoch mit einem großen Aufwand verbunden.

### Zusammenfassung der Erfindung

Der Erfindung liegt die Aufgabe zugrunde, für ein Verfahren der eingangs genannten Art eine Verbesserung gegenüber dem Stand der Technik anzugeben. Eine weitere Aufgabe besteht darin, ein Schienenfahrzeug zur Durchführung des Verfahrens darzulegen.

Erfindungsgemäß werden diese Aufgaben gelöst durch ein Verfahren gemäß Anspruch 1 und ein Schienenfahrzeug gemäß Anspruch 8. Abhängige Ansprüche geben vorteilhafte Ausgestaltungen der Erfindung an.

Die Erfindung sieht vor, dass mittels einer Auswerteeinrichtung die Profildaten relativ zu einer am Schienenfahrzeug vorgegebenen Bezugsbasis ausgewertet werden, um daraus den Verlauf einer Gleismittelachse und/oder einer Schiene abzuleiten. Dadurch ist kein weiteres Messsystem notwendig um eine Gleislage zu ermitteln. Es werden lediglich die mittels des Laserscanners aufgenommenen Profildaten des Gleises ausgewertet, um daraus den Verlauf des Gleises bzw. der Schienen abzuleiten. Dabei ist am Schienenfahrzeug ein entsprechendes Bezugssystem vorgegeben. Auf diese Weise kann nahezu jedes Schienenfahrzeug durch das Anbringen eines Laserscanners zur Gleisvermessung genutzt werden. Als Bezugsbasis wird eine an Drehpunkten der Schienenfahrwerke und am Laserscanner ausgerichtete Bezugsebene vorgegeben, aus den Profildaten wird ein Versatz der Bezugsebene gegenüber einem Schienenkantenpunkt bestimmt und daraus und aus Abständen zwischen den Drehpunkten der Schienenfahrwerke und dem Laserscanner wird eine Krümmung bzw. ein Krümmungsradius eines Gleisbogens abgeleitet. Für viele Anwendungen ist ein durch die Drehpunkte der Schienenfahrzeuge gebildetes Bezugssystem ausreichend genau, sodass für das Verfahren keine weiteren Messkomponenten erforderlich sind.

In einer vorteilhaften Weiterbildung ist vorgesehen, dass laufend die Lage der Drehpunkte der Schienenfahrwerke gegenüber den Schienen des Gleises erfasst wird. Damit werden geringfügigen Abweichungen der Drehpunkte gegenüber der Gleismittelachse erfasst. Diese können beispielsweise durch Pendelbewegungen oder eine Radfederung auftreten. Bei der Ermittlung der Gleisgeometrie führt die Kompensation dieser Abweichungen zu einer erhöhten Genauigkeit.

Zudem ist es von Vorteil, wenn die Bezugsebene als Ebene durch eine Laserscannerachse und durch die Drehpunkte vorgegeben wird. Dadurch erfolgt eine einfachere und schnellere Berechnung der Gleislage.

Dabei sieht eine weitere Verbesserung vor, dass für jede Schiene die Lage eines Schienenkantenpunktes bestimmt wird und dass daraus der Versatz der Bezugsebene gegenüber der Gleismittelachse bestimmt wird. Der Versatz (Offset) ist eine einfach zu messende Größe, aus der über geometrische Beziehungen die Krümmung eines Gleisbogens ableitbar ist.

Eine vorteilhafte Weiterbildung ist gegeben, wenn eine durch mehrere Schienenkantenpunkte festgelegte Referenzebene des Gleises vorgegeben wird und wenn eine Gleisüberhöhung aus einer Abweichung der Bezugsbasis von dieser Referenzebene abgeleitet wird. Damit kann aus einem Versatz des Bezugssystems (z.B. vertikalen Laserscanner-Achse) gegenüber der Referenzebene auf einfache Weise unter Berücksichtigung einer Neigung des Aufbaus die Gleisüberhöhung abgeleitet werden.

Dabei ist es von Vorteil, wenn als Referenzebene eine symmetrisch zwischen den Schienenkantenpunkten verlaufende Vertikalebene vorgegeben wird. Diese Referenzebene bewegt sich in Fahrtrichtung kontinuierlich mit dem Schienenfahrzeug mit und gibt auf einfache Weise die momentane Gleislage bezüglich der Bezugsbasis wieder.

Optional ist vorgesehen, dass eine Neigung eines Aufbaus mittels eines Neigungsmessers erfasst wird. Auf diese Weise wird eine genaue Bestimmung einer Gleisüberhöhung mit geringem Rechenaufwand ermöglicht.

Ein erfindungsgemäßes Schienenfahrzeug zum kontinuierlichen, berührungslosen Erfassen einer Gleisgeometrie eines Gleises umfasst einen am Schienenfahrzeug angeordneten Laserscanner zur Erfassung von in Querrichtung verlaufenden Profildaten des Gleises und eine Auswerteinrichtung, die zur Durchführung eines der vorgenannten Verfahren eingerichtet ist. Ein solches Schienenfahrzeug liefert mit einfachen Mitteln ausreichend genaue Messergebnisse, wobei auch konventionelle Schienenfahrzeuge als Messfahrzeuge zum Einsatz kommen können.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Seitenansicht Schienenfahrzeug
- Fig. 2: Draufsicht in einem Gleisbogen
- Fig. 3: Frontansicht des Schienenfahrzeugs im Gleisbogen
- Fig. 4: Frontansicht des Schienenfahrzeugs bei Gleisüberhöhung

### Beschreibung der Ausführungsformen

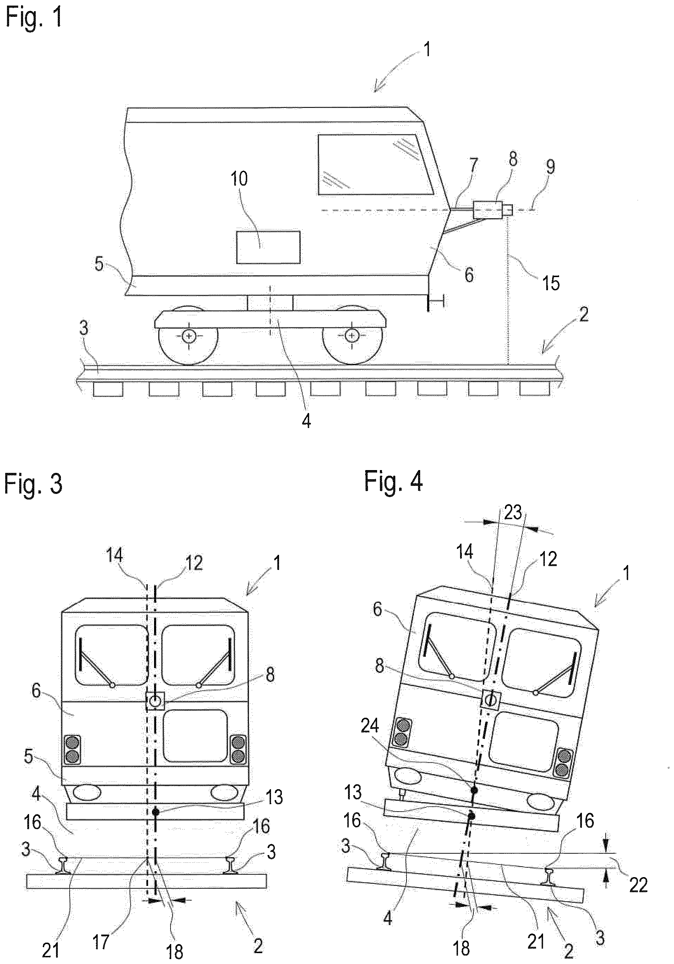

Fig. 1 zeigt ein vereinfacht dargestelltes Schienenfahrzeug 1 zum kontinuierlichen, berührungslosen Erfassen einer Gleisgeometrie eines Gleises 2 mit auf Schienen 3 verfahrbaren, als Drehgestelle ausgebildete Schienenfahrwerken 4 und einem darauf abgestützten Fahrzeugrahmen 5 samt Aufbau 6. Mittig an einer Front des Aufbaus 6 ist auf einem Montagerahmen 7 ein Laserscanner 8 angeordnet. Der Fahrzeugrahmen 5 samt Aufbau 6 bildet eine Plattform, von der aus die Messungen per Laserscanner 8 erfolgen. Der Laserscanner 8 ist vorteilhafterweise als Rotationslaser ausgeführt, der um eine Laserscannerachse 9 rotiert und das Gleis 2 normal zu dieser abtastet. Auch ein nach unten ausgerichteter Linienscanner kann zur Anwendung kommen. Im Schienenfahrzeug 1 ist eine Auswerteeinrichtung 10 für eine Berechnung von Messergebnissen angeordnet.

Optional sind an den Schienenfahrwerken 4 weitere Messeinrichtungen (z.B. gegen die Schienen 3 gerichtete Laser-Linienscanner) angeordnet, um die geringfügigen Bewegungen der Drehpunkte 13 gegenüber dem Gleis 2 zu erfassen. In den mittels der Auswerteeinrichtung 10 durchgeführten Berechnungen werden diese erfassten Bewegungen kompensiert.

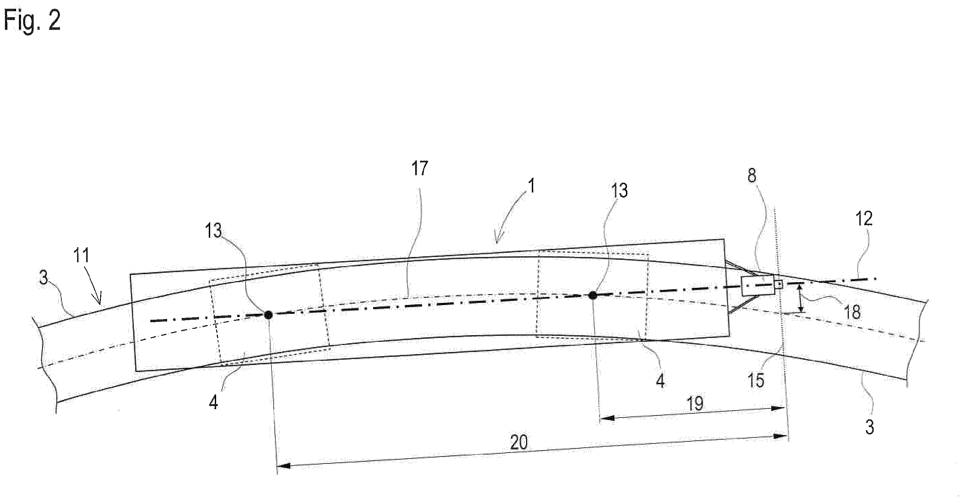

Fig. 2 zeigt eine vereinfachte Draufsicht des Schienenfahrzeugs 1 in einem Gleisbogen 11. Als Bezugsbasis 12 ist eine Bezugsebene am Laserscanner 8 und an Drehpunkten 13 der Schienenfahrwerke 4 ausgerichtet. In der Draufsicht erscheint die Bezugsebene bei fehlender Fahrzeugneigung als Längsachse durch die Drehpunkte 13 und die Laserscannerachse 9. Mittels eines rotierenden Laserstrahls des Laserscanners 8 werden in einer normal zur Bezugsebene verlaufenden Erfassungsebene 15 Profildaten des Gleises 2 erfasst. In dieser Erfassungsebene 15 wird jeweils ein innerer Schienenkantenpunkt 16 der jeweiligen Schiene 3 abtastet.

Die Auswerteeinrichtung 10 erkennt mittels geläufiger Auswertemethoden wie Mustererkennung in den erfassten Profildaten den typischen Schienenquerschnitt und bestimmt anhand der Schienenkantenpunkte 16 die Position der Gleismittelachse 17. Beispielsweise wird ein durch Bezugsebene und Erfassungsebene 15 definiertes Koordinatensystem definiert, um die ermittelten Punkte anhand ihrer Koordinatenwerte abzuspeichern. In einem nächsten Schritt wird ein Versatz 18 der Bezugsbasis 12 gegenüber der Gleismittelachse 17 ermittelt. Im einfachsten Fall ist das der horizontale Abstand zwischen Bezugsebene und Gleismittelachse 17 entlang der Ermittlungsebene 15.

Die Kombination der Längsachse mit dem Versatz 18 wird wie eine Messsehne in Kombination mit einer Pfeilhöhe dazu benutzt, um eine Krümmung bzw. einen Krümmungsradius des Gleisbogens 11 zu ermitteln. Dabei wird eine einfache geometrische Beziehung zwischen der Krümmung, dem Versatz und den gleichbleibenden Abständen 19, 20 zwischen den Drehpunkten 13 und dem Laserscanner 8 herangezogen.

Fig. 3 zeigt eine Frontansicht des Schienenfahrzeuges 1 mit mittig angeordnetem Laserscanner 8 bei einer Kurvenfahrt. Das Gleisprofil in der Erfassungsebene 15 ist mit durchgezogenen Linien ausgeführt. Mit dünnen gepunkteten Linien ist das Schienenfahrwerk 4 in einer dahinter liegenden Ebene dargestellt. Als Bezugsbasis 12 verläuft die Bezugsebene durch den Laserscanner 8 und die Drehpunkte 13. Die erfassten Schienenkantenpunkte 16 definieren eine Horizontalebene 21 des Gleises 2. Symmetrisch zwischen den Schienenkantenpunkten 16 ist eine vertikale Referenzebene 14 vorgegeben. Auf einem ebenen geraden Gleis 2 befindet sich der Laserscanner 8 genau über der Gleismittelachse 17. Im Gleisbogen 11 verschiebt sich nun der Laserscanner 8 gegenüber der Gleismittelachse 17 und aus den Profildaten wird der Versatz 18 der Bezugsebene gegenüber der vertikalen Referenzebene 14 berechnet.

Fig. 4 zeigt das Schienenfahrzeug 1 in einer Gleisüberhöhung 22. Gleisüberhöhungen 22 werden klar von einem Gleisbogen 11 abgegrenzt, da sich der Aufbau 6 des Schienenfahrzeugs 1 aufgrund einer Federung an den Drehgestellen 4 nach innen neigt. Im Ausführungsbeispiel neigt sich die Bezugsebene (Bezugsbasis 12) um einen Neigungswinkel 23. Dieser Neigungswinkel 23 und die Lage einer Neigungsachse 24 sind bei niedrigen Geschwindigkeiten in Abhängigkeit von einer Gleisüberhöhung vorbestimmt, weil dynamische Einflüsse vernachlässigbar sind. Dabei ist auch der durch die Neigung hervorgerufener Versatz 18 entlang der Horizontalebene 21 vorbestimmt.

Zur Bestimmung einer Gleisüberhöhung 22 wird zunächst eine Neigung des Aufbaus 6 ermittelt. Das geschieht beispielsweise durch eine Auswertung der Profildaten, wobei rechnerisch aus einer Verzerrung der Schienenprofile auf einen geneigten Blickwinkel des Laserscanners 8 geschlossen wird. Eine genauere Ermittlung des Neigungswinkels 23 erfolgt mittels eines optionalen Neigungssensors. In der Auswerteeinrichtung 10 sind die vorbestimmten Neigungswinkel 23 in Abhängigkeit der Gleisüberhöhung 22 in Tabellenform oder als Funktion abgespeichert. Durch einen Abgleich mit der ermittelten Neigung lässt sich die momentan vorhandene Gleisüberhöhung bestimmen.

Entspricht bei einer festgestellten Neigung des Aufbaus 6 der ermittelte Versatz 18 nicht dem infolge der Neigung vorbestimmten Versatz, ist dies auf einen vorhandenen Gleisbogen 11 zurückzuführen. Zur Berechnung der Krümmung des Gleises 2 wird dann die Differenz zwischen dem ermittelten Versatz 18 und dem infolge der Neigung vorbestimmten Versatz herangezogen.

## Patentansprüche

1. Verfahren zur berührungslosen Erfassung einer Gleisgeometrie eines Gleises (2) mittels eines Schienenfahrzeugs (1), das mit Schienenfahrwerken (4) entlang des Gleises (2) bewegt wird, wobei mittels eines Laserscanners (8) in Querrichtung verlaufende Profildaten des Gleises (2) erstellt werden, wobei mittels einer Auswerteeinrichtung (10) die Profildaten relativ zu einer am Schienenfahrzeug (1) vorgegebenen Bezugsbasis (12) ausgewertet werden, um daraus den Verlauf einer Gleismittelachse (17) und/oder einer Schiene (3) abzuleiten, **dadurch gekennzeichnet, dass** als Bezugsbasis (12) eine an Drehpunkten (13) der Schienenfahrwerke (4) und am Laserscanner (8) ausgerichtete Bezugsebene vorgegeben wird, dass aus den Profildaten ein Versatz (18) der Bezugsebene gegenüber einem Schienenkantenpunkt (16) bestimmt wird und dass daraus und aus Abständen zwischen den Drehpunkten (13) und dem Laserscanner (8) eine Krümmung eines Gleisbogens (11) abgeleitet wird.

2. Verfahren nach Anspruch 1, **dadurch gekennzeichnet, dass** laufend die Lage der Drehpunkte (13) der Schienenfahrwerke (4) gegenüber den Schienen (3) des Gleises (2) erfasst wird.

3. Verfahren nach Anspruch 1 oder 2, **dadurch gekennzeichnet, dass** die Bezugsebene als Ebene durch eine Laserscannerachse (9) und durch die Drehpunkte (13) vorgegeben wird.

4. Verfahren nach Anspruch 3, **dadurch gekennzeichnet, dass** für jede Schiene (3) die Lage eines Schienenkantenpunktes (16) bestimmt wird und dass daraus der Versatz (18) der Bezugsebene gegenüber der Gleismittelachse (17) bestimmt wird.

5. Verfahren nach einem der Ansprüche 1 bis 4, **dadurch gekennzeichnet, dass** eine durch Schienenkantenpunkte (16) festgelegte Referenzebene (14) des Gleises (2) vorgegeben wird und dass eine Gleisüberhöhung aus einer Abweichung der Bezugsbasis (12) von dieser Referenzebene (14) abgeleitet wird.

6. Verfahren nach Anspruch 5, **dadurch gekennzeichnet, dass** als Referenzebene (14) eine zwischen den Schienenkantenpunkten (16) verlaufende Vertikalebene vorgegeben wird.

7. Verfahren nach Anspruch 5 oder 6, **dadurch gekennzeichnet, dass** eine Neigung eines Aufbaus 6 des Schienenfahrzeuges (1) mittels eines Neigungsmessers erfasst wird.

8. Schienenfahrzeug (1) zum kontinuierlichen, berührungslosen Erfassen einer Gleisgeometrie eines Gleises (2), umfassend einen am Schienenfahrzeug (1) angeordneten Laserscanner (8) zur Erfassung von in Querrichtung verlaufenden Profildaten des Gleises (2) **dadurch gekennzeichnet, dass** das Schienenfahrzeug (1) eine Auswerteinrichtung (10) umfasst, die zur Durchführung eines Verfahrens nach einem der Ansprüche 1 bis 7 eingerichtet ist.

## Claims

1. A method for contactless recording of a track geometry of a track (2) by means of a rail vehicle (1) that is moved along the track (2) on on-track undercarriages (4), wherein transversely extending profile data of the track (2) are compiled by means of a laser scanner (8), wherein by means of an evaluation device (10), the profile data are evaluated relative to a reference base (12) pre-defined on the rail vehicle (1) in order to derive from this the course of a track central axis (17) and/or a rail (3), **characterized in that** that a reference plane, aligned with pivot points (13) of the on-track undercarriages (4) and with the laser scanner (8), is specified as reference base (12), that a displacement (18) of the reference plane relative to a rail edge point (16) is determined from the profile data, and that from this and from distances between the pivot points (13) and the laser scanner (8), a curvature of a track curve (11) is derived.

2. A method according to claim 1, **characterized in that** the position of the pivot points (13) of the on-track undercarriages (4) relative to the rails (3) of the track (2) is continuously recorded.

3. A method according to claim 1 or 2, **characterized in that** the reference plane is specified as a plane through a laser scanner axis (9) and through the pivot points (13).

4. A method according to claim 3, **characterized in that** the position of a rail edge point (16) is determined for each rail (3), and that from this the displacement (18) of the reference plane relative to the track center axis (17) is determined.

5. A method according to one of claims 1 to 4, **characterized in that** a reference plane (14) of the track 2 determined by rail edge points (16) is prescribed, and that a track super-elevation is derived from a deviation of the reference base (12) from said reference plane (14).

6. A method according to claim 5, **characterized in that** a vertical plane extending between the rail edge points (16) is specified as reference plane (14).

7. A method according to claim 5 or 6, **characterized in that** an inclination of a superstructure (6) of the rail vehicle (1) is detected by means of an inclinometer.

8. A rail vehicle (1) for continuous contactless recording of a track geometry of a track (2), comprising a laser scanner (8), arranged on the rail vehicle (1), for the recording of transversely extending profile data of the track (2), **characterized in that** the rail vehicle (1) comprises an evaluation device (10) configured for carrying out a method according to one of claims 1 to 7.

## Revendications

1. Procédé de détection sans contact d'une géométrie d'une voie ferrée (2) au moyen d'un véhicule ferroviaire (1) qui est déplacé avec des mécanismes de roulement ferroviaires (4) le long de la voie ferrée (2), dans lequel des données de profil de la voie ferrée (2) s'étendant dans la direction transversale sont établies au moyen d'un scanner laser (8), dans lequel les données de profil sont évaluées au moyen d'un dispositif d'évaluation (10) par rapport à une base de référence (12) prédéfinie sur le véhicule ferroviaire (1) pour en dériver le tracé d'un axe médian de voie (17) et/ou d'un rail (3), **caractérisé en ce qu'**un plan de référence orienté vers des points de rotation (13) des mécanismes de roulement ferroviaires (4) et vers le scanner laser (8) est prédéfinie en tant que base de référence (12), qu'un décalage (18) du plan de référence par rapport à un point d'arête de rail (16) est déterminé à partir des données de profil et qu'une courbure d'une voie en courbe (11) est dérivée de celui-ci et de distances entre les points de rotation (13) et le scanner laser (8).

2. Procédé selon la revendication 1, **caractérisé en ce que** la position des points de rotation (13) des mécanismes de roulement ferroviaires (4) par rapport aux rails (3) de la voie ferrée (2) est détectée en continu.

3. Procédé selon la revendication 1 ou 2, **caractérisé en ce que** le plan de référence est prédéfini en tant que plan à travers un axe de scanner laser (9) et à travers les points de rotation (13).

4. Procédé selon la revendication 3, **caractérisé en ce que** pour chaque rail (3), la position d'un point d'arête de rail (16) est déterminée et que le décalage (18) du plan de référence par rapport à l'axe médian de voie (17) est déterminé à partir de celle-ci.

5. Procédé selon une des revendications 1 à 4, **caractérisé en ce qu'**un plan de référence (14) de la voie ferrée (2) défini par des points d'arête de rail (16) est prédéfini et qu'un dévers est dérivé d'un écart de la base de référence (12) de ce plan de référence (14).

6. Procédé selon la revendication 5, **caractérisé en ce qu'**un plan vertical s'étendant entre les points d'arête de rail (16) est prédéfini en tant que plan de référence (14).

7. Procédé selon la revendication 5 ou 6, **caractérisé en ce qu'**une inclinaison d'une construction (6) du véhicule ferroviaire (1) est détectée au moyen d'un inclinomètre.

8. Véhicule ferroviaire (1) pour la détection continue sans contact d'une géométrie d'une voie ferrée (2), comprenant un scanner laser (8) disposé sur le véhicule ferroviaire (1) pour la détection de données de profil de la voie ferrée (2) s'étendant dans la direction transversale, **caractérisé en ce que** le véhicule ferroviaire (1) comprend un dispositif d'évaluation (10) qui est configuré pour la réalisation d'un procédé selon une des revendications 1 à 7.
